# EUROPÄISCHE PATENTSCHRIFT

(11) **EP 3 898 505 B1**
(45) Veröffentlichungstag und Bekanntmachung des Hinweises auf die Patenterteilung: **08.11.2023**
(21) Anmeldenummer: 19824271.1
(22) Anmeldetag: 12.12.2019
(51) Int. Cl.: C01B 3/28, B01J 8/08, B01J 19/00, B01J 8/12

(54) **VERFAHREN ZUR KOHLENWASSERSTOFFPYROLYSE MIT RÄUMLICH GETRENNTER BEHEIZUNGS- UND REAKTIONSZONE INNERHALB DES REAKTORRAUMS**
PROCESS FOR HYDROCARBON PYROLYSIS WITH A SPATIALLY SEPARATE HEATING ZONE AND REACTION ZONE INSIDE THE REACTOR SPACE
PROCÉDÉ DE PYROLYSE D'HYDROCARBURES AVEC ZONES DE CHAUFFAGE ET DE RÉACTION SPATIALEMENT SÉPARÉES À L'INTÉRIEUR DE LA CHAMBRE DU RÉACTEUR

(30) Priorität: 18.12.2018 DE 102018132661
(43) Veröffentlichungstag der Anmeldung: 27.10.2021
(60) Teilanmeldung: 23199099.5
(73) Patentinhaber: thyssenkrupp Uhde GmbH, 44141 Dortmund (DE); thyssenkrupp AG, 45143 Essen (DE)
(72) Erfinder: ANTWEILER, Nicolai, 45147 Essen (DE)
(74) Vertreter: thyssenkrupp Intellectual Property GmbH
(86) Internationale Anmeldenummer: PCT/EP2019/084807
(87) Internationale Veröffentlichungsnummer: WO 2020/126789

(56) Entgegenhaltungen:
- DD-A1- 118 263
- US-A- 2 982 622
- US-A- 3 254 957

## Beschreibung

### Gebiet der Erfindung

Die Erfindung befindet sich auf dem Gebiet der pyrolytischen Zersetzung von Kohlenwasserstoffen und bevorzugt von Methan zu Wasserstoff und Pyrolysekohlenstoff und betrifft insbesondere ein neues Verfahren für eine entsprechende Umsetzung, bei dem die Reaktionszone, in der die Kohlenwasserstoffe zu Wasserstoff und Kohlenstoff umgesetzt werden, unterhalb von Elektroden liegt, über die Kohlenstoffpartikel in einem Reaktor widerstandsbeheizt werden, so dass im Reaktorraum zwischen den Elektroden ein inhomogener Wärmeeintrag und die Ausbildung von Feststoffagglomeraten, die zu einem Verblocken des Reaktors führen können, vermieden wird. Die Erfindung betrifft weiterhin ein Verfahren dieser Art, bei dem mehrere Reaktoren hintereinander geschaltet sind und in dem Kohlenstoffpartikel aus einem vorgeschalteten Reaktor in einen nachgeschalteten Reaktor eingeleitet werden, sowie entsprechende Vorrichtungen.

### Stand der Technik

In der nahen bis mittelfristigen Zukunft wird die Wasserstoffproduktion weiterhin auf fossilen Brennstoffen, in erster Linie Erdgas (NG), beruhen. Auf der anderen Seite sind konventionelle Wasserstoffproduktionsprozesse eine der Hauptquellen für anthropogene CO₂-Emissionen in der Atmosphäre.

Im Prinzip kann Wasserstoff durch oxidative und nicht oxidative Umwandlungsprozesse aus Kohlenwasserstoffbrennstoffen gewonnen werden. Oxidative Umwandlungen beinhalten die Reaktion von Kohlenwasserstoffen mit Oxidationsmitteln, wie Wasser, Sauerstoff oder Kombinationen von Wasser und Sauerstoff (Dampfreformieren, partielle Oxidation und autothermische Reformationsprozesse). Als ein erster Schritt wird in diesen Prozessen eine Mischung von Wasserstoff und Kohlenmonoxid (Synthesegas) gebildet, aus der der Wasserstoff durch Gaskonditionierung (Wassergas-Shiftreaktion) und vorzugsweise Oxidationsreaktionen sowie CO₂-Entfernungsstufen abgetrennt wird. Die Gesamt-COz-Emissionen aus diesen Prozessen erreicht bis zu 0,4 m³ pro m³ produzierter Wasserstoff.

Nicht-oxidative Verfahren beinhalten die thermische Zersetzung (oder Dissoziation, Pyrolyse, Cracking) von Kohlenwasserstoffen in Wasserstoff und Kohlenstoff. Die thermische Zersetzung von Erdgas wurde über mehrere Jahrzehnte als ein Mittel zur Herstellung von Ruß (carbon black) verwendet, wobei Wasserstoff ein zusätzlich im Prozess anfallendes Wertprodukt darstellt. In diesen Verfahren wird Kohlenwasserstoffdampf bei einer Temperatur von etwa 1400°C über einem vorerhitzten Kontakt in Wasserstoff und Rußpartikel zersetzt. Das Verfahren wurde beispielsweise als semikontinuierlicher (cyclischer) Prozess unter Verwendung von zwei Tandemreaktoren durchgeführt. Die US 2,926,073 beschreibt eine verbesserte Vorrichtung zur Herstellung von Ruß und Wasserstoff aus Kohlenwasserstoffen durch einen kontinuierlichen thermischen Zersetzungsprozess.

Zur Bereitstellung der für die Reaktion erforderlichen Reaktionsenthalpie ist ein elektrischer Wärmeeintrag besonders geeignet, wobei zweckmäßig regenerativ erzeugter Strom für das Verfahren genutzt werden kann. Das Verfahren ist in diesem Fall eine "grüne" Wasserstofftechnologie. Der Reaktor wird dabei über mindestens ein in der Partikelschüttung axial angeordnetes Elektrodenpaar widerstandsbeheizt. Obwohl Kohlenstoffpartikel an sich eine hohe elektrische Leitfähigkeit aufweisen, resultiert der elektrische Widerstand aus den Kontaktpunkten zwischen den Partikeln bzw. den geringen Übertragungsflächen. Der elektrische Strom fließt über die Kohlenstoffschüttung und dissipiert aufgrund des elektrischen Widerstands der Partikelschüttung in thermische Energie.

Die US 2,982,622 beschreibt ein Verfahren zur thermischen Zersetzung von Methangas zu Wasserstoff und Kohlenstoff, wobei in einem Reaktor zugeführtes Methangas in ein Bett aus Kokspartikeln geführt werden. Im mittleren Bereich des Reaktors sind mehrere Elektroden angeordnet, über die die Kokspartikel widerstandsbeheizt werden, so dass sich im Bereich zwischen den Elektroden eine Reaktionszone mit einer Temperatur im Bereich von etwa 1040 bis 1380°C ergibt, in der die Pyrolysereaktion des zugeführten Methans zu Kohlenstoff und Wasserstoff stattfindet. Im Laufe des Verfahrens werden von oben kontinuierlich weitere Kohlenstoffpartikel in den Reaktorraum zugegeben während Kohlenstoffpartikel auf der Unterseite entnommen werden. Zudem ist es möglich, die an der Unterseite entnommenen Kohlenstoffpartikel an der Oberseite des Reaktors in den Prozess zurückzuführen. Durch diese Verfahrensführung soll ein effektiver Wärmeübertrag des aus der Reaktionszone kommenden Gases auf die Kohlenstoffpartikel, sowie der aus der Reaktionszone kommenden Kohlenstoffpartikel auf das zugeführte Gas gewährleistet werden.

Die Verwendung von Kohlenstoffpartikeln an Stelle von anderen Katalysatormaterialien, die zum Teil eine Umsetzung von Kohlenwasserstoffen auch schon bei niedrigeren Temperaturen als 1000°C erlauben (vgl. z.B. US 3,284,161), ist mit dem Vorteil verbunden, dass eine Formulierung des Kohlenstoffs bereits im Reaktionsschritt möglich ist. Bei der Vorlage von Kohlenstoffpartikeln pyrolysiert das Methan vorzugsweise auf den vorgelegten Partikeln, es kann aber auch zur Bildung von Ruß in der Gasphase kommen. Die Partikelgrößen sind durch Größe der vorgelegten Partikel und die spezifische Kohlenstoffabscheidung einstellbar.

Ein Problem der Verfahrensführung, wie sie in US 2,982,622 beschrieben ist, besteht allerdings darin, dass sich ein homogener Wärmeeintrag über längere Zeit nicht ohne weiteres gewährleisten lässt. Für einen homogenen Wärmeeintrag in das Beheizungsvolumen ist ein homogener elektrischer Widerstand über die gesamte Querschnittsfläche des Reaktors erforderlich. Treten Pfade mit abweichendem elektrischem Widerstand auf, fließt der elektrische Strom bevorzugt in den Bereichen des geringeren elektrischen Widerstands, was zur Folge hat, dass die Umsätze in diesen Bereichen, aufgrund höherer Temperaturen, höher sind. In Folge des Betriebs des Pyrolysereaktors kommt es über die Zeit zur Ablagerung des pyrolytischen Kohlenstoffs, was zur Folge hat, dass sich der Widerstand entlang dieser "bevorzugten Pfade" weiter reduziert. Dies resultiert in Hotspots und letztendlich einem Versagen des Beheizungskonzepts.

Ein weiterer kritischer Aspekt bei einer Verfahrensführung, wie sie in der US 2,962,622 beschrieben ist, ist die erhöhte Verblockungsneigung infolge der Bildung von Pyrolysekohlenstoffbrücken.

Zur Lösung dieser Probleme wird in der US 3,254,957 eine Verfahrensführung vorgeschlagen, bei dem ein bis zu einer gewissen Höhe mit Kokspartikeln gefüllter Reaktor verwendet wird. Im Bereich unterhalb des oberen Partikelfüllstands sind im Reaktor mehrere Elektroden angebracht, über die das Partikelmaterial widerstandsbeheizt wird. Durch ein von unten in die Kokspartikel eingeleitetes inertes Gas (z.B. Wasserstoff) werden die Kokspartikel im Reaktor fluidisiert. Methangas wird im Bereich oberhalb der Elektroden in das Kokspartikelbett eingeleitet und dort umgesetzt, so dass im Reaktionsprozess generierter Wasserstoff auf der Oberseite des Reaktors abgezogen werden kann.

Eine Verfahrensführung, wie sie in der US 3,254,957 beschrieben ist, vermeidet zwar die vorstehend geschilderten Nachteile des Verfahrens aus der US 2,982,622, ein wesentlicher Nachteil dieses Verfahrenskonzept besteht jedoch darin, dass ein Wärmeaustausch zwischen den Kokspartikeln und dem zu zersetzenden Kohlenwasserstoffmaterial nicht möglich ist. Damit erfordert die Lehre der US 3,254,957 einen signifikant höheren Energieeintrag als das in der US 2,982,622 beschriebene Verfahren, was die Wirtschaftlichkeit des Verfahrens beeinträchtigt.

Vor diesem Hintergrund besteht ein Bedarf für ein Verfahren zur pyrolytischen Zersetzung von Kohlenwasserstoffen und insbesondere Methangas zu Wasserstoff und Kohlenstoff, das einerseits die günstige Energieübertragung Kohlenwasserstoffe <-> Kohlenpartikel aus dem in der US 2,982,622 beschriebenen Verfahren realisiert, bei dem aber andererseits die Problematik der Brückenbildung und Verblockung im Bereich zwischen den Elektroden vermieden wird. Die vorliegende Erfindung befasst sich mit diesem Bedarf.

### Beschreibung der Erfindung

Gelöst wird das vorstehend beschriebene Problem durch ein Verfahren zur Herstellung von Wasserstoff und Pyrolysekohlenstoff aus Kohlenwasserstoffen, wobei die Kohlenwasserstoffe in einem Reaktor bei Temperaturen von 1000°C oder mehr zu Wasserstoff und Kohlenstoff umgesetzt werden, und wobei der Reaktor mindestens zwei in Fließrichtung der Kohlenwasserstoffe voneinander beanstandete Elektroden aufweist, bei dem Kohlenstoffpartikel oder Packungen davon mit einer solchen Geschwindigkeit im Gegenstrom zu den Kohlenwasserstoffen in den Reaktor eingeleitet und im Bereich zwischen den Elektroden auf eine Temperatur oberhalb der Zersetzungstemperatur der Kohlenwasserstoffe zu Wasserstoff und Kohlenstoff erhitzt werden, dass die Reaktionszone, in der die Kohlenwasserstoffe zu Wasserstoff und Kohlenstoff umgesetzt werden, in Bezug auf die Strömungsrichtung der Kohlenstoffpartikel räumlich von der sich zwischen den Elektroden befindlichen Beheizungszone getrennt ist, wobei die Kohlenstoffpartikel zuerst die Beheizungszone und anschließend die Reaktionszone durchströmen.

Demzufolge wird im Rahmen der vorliegenden Erfindung die Reaktionsfront, in dem die wesentliche Zersetzungsreaktion der Kohlenwasserstoffe zu Wasserstoff und Kohlenstoff stattfindet, in den Bereich unterhalb der Beheizungselemente bzw. unterhalb der Elektroden verschoben. Eine derartige Positionierung der Reaktionsfront ist über eine geeignete Einstellung der Temperatur, auf die die Kohlenstoffpartikel im Bereich zwischen den Elektroden erhitzt werden, sowie des Massenstroms der Kohlenstoffpartikel durch den Reaktor, und des Massenstroms der Kohlenwasserstoffe, die entgegen den Kohlenstoffpartikeln durch den Reaktor geleitet werden, realisierbar.

Die Wärmeintegration der elektrisch beheizten Kohlenstoffschüttung in der Reaktionszone bedingt eine Gegenstromfahrweise über einen Wanderbettbetrieb des Kohlenstoffs, wobei über die Geschwindigkeit bzw. über den Wärmekapazitätsstrom der Kohlenstoffschüttung die Zone hoher Temperatur und damit die Reaktionszone unterhalb der unteren Elektrode positioniert werden kann. Die mit Pyrolysekohlenstoff beschichteten Partikel können nach dem Durchlaufen des Reaktors am Reaktorboden ausgetragen werden.

Dadurch, dass die Pyrolysereaktion unterhalb der Elektroden stattfindet, wird eine Pyrolyse im Bereich zwischen den Elektroden im Wesentlichen vollständig unterbunden, so dass der elektrische Widerstand der sich zwischen den Elektroden befindlichen Partikel nicht durch die Generierung von Kohlenstoff in diesem Bereich beeinflusst wird. Damit kann auch über lange Betriebszeiten des Reaktors ein homogener Wärmeeintrag über den Querschnitt gesichert und ein Ausfall der Beheizung und die Ausbildung von Hotspots ausgeschlossen werden.

Unter der Angabe "unterhalb" ist im Kontext der vorliegenden Erfindung eine nähere Positionierung des bezeichneten Gegenstands gegenüber einem Referenzgegenstand zum Erdmittelpunkt zu verstehen.

Kinetisch ist die Pyrolyse von Kohlenwasserstoffen bei Temperaturen von mehr als 800°C relevant, so dass sich die zur Verfügung stehende Reaktionsenthalpie aus dem Produkt von Wärmekapazität und Temperaturdifferenz ergibt (die Temperaturdifferenz bezeichnet hier die Differenz zwischen der Temperatur der zwischen den Elektroden aufgeheizten Partikel und der für eine relevante Reaktion erforderlichen Temperatur von 800°C). Es ist daher sicherzustellen, dass im Rahmen des erfindungsgemäßen Verfahrens die Kohlenstoffpartikel im Bereich der Elektroden auf eine Temperatur oberhalb von 800°C erhitzt werden. Um eine Verschiebung der Reaktionszone unterhalb der Elektroden zu ermöglichen, ist es zweckmäßig, wenn die Kohlenstoffpartikel zwischen den Elektroden auf eine Temperatur im Bereich von 1000°C bis 2000°C, bevorzugt 1200°C bis 1800°C und weiter bevorzugt 1400°C bis 1600°C erhitzt werden. Eine Obergrenze von 1600°C hat den Vorteil, dass die Ausmauerung des Reaktors mit konventionellen Materialien durchgeführt werden kann, was sich günstig auf die Kosten des entsprechenden Reaktors auswirkt.

Die in das erfindungsgemäße Verfahren einzubeziehenden Kohlenwasserstoffe unterliegen keinen relevanten Beschränkungen, soweit die Freisetzung von Wasserstoff und die Bildung von Kohlenstoff im Temperaturbereich oberhalb von 1000°C möglich sind. Als geeignete Kohlenwasserstoffe können z.B. bei Normaltemperatur und Normaldruck gasförmige oder flüssige Kohlenwasserstoffe wie Methan, Propan, Benzin, Diesel, Restöl oder Rohöl angegeben werden. Bevorzugt als Kohlenwasserstoffe sind im Rahmen der vorliegenden Erfindung gasförmige Kohlenwasserstoffe wie Methan und Propan, von denen Methan am meisten bevorzugt ist. Die Umsetzung dieser Kohlenwasserstoffe erfolgt gemäß den Reaktionsgleichungen:

CH₄ → C + 2 H₂,

bzw.

CₙHₘ → nC + m/2H₂,

wobei n größer als 1 und m gleich oder weniger als (2n + 2) ist. Beide Reaktionen sind endotherm.

Das erfindungsgemäße Verfahren lässt sich insbesondere bei der Verwendung von Methan als Ausgangsmaterial günstig durchführen, da Methan als Bestandteil von Erdgas in großen Mengen und zudem kostengünstig vorhanden ist. Im Verfahren gemäß der vorliegenden Erfindung handelt es sich bei den Kohlenwasserstoffen daher bevorzugt um Methan oder Erdgas.

Für die Kohlenwasserstoffe bzw. für Methan als bevorzugte Ausführungsform gilt es als bevorzugt, wenn diese mit einer Geschwindigkeit von 0,1 m/s bis 10 m/s, bevorzugt 0,2 m/s bis 5 m/s in den Reaktor zugeführt werden.

Bei den Kohlenstoffpartikeln handelt es sich bevorzugt um Pyrolysekohlenstoff- oder Kokspartikel, ganz besonders bevorzugt um Pyrolysekohlenstoffpartikel. Alternativ oder zusätzlich dazu weisen die Kohlenstoffpartikel zweckmäßig eine Partikelgröße im Bereich von 0,5 mm bis 16 mm und bevorzugt von 1 mm bis 8 mm auf.

Als Kohlenstoffpartikel werden solche verwendet, die im Bereich oberhalb von 1000°C eine pyrolytische Zersetzung der Kohlenwasserstoffe begünstigen und elektrisch leitfähig sind. Zweckmäßig können demzufolge insbesondere elektrisch leitfähige Partikel oder Packungen mit einer Leitfähigkeit von 0,001 bis 100 S/m eingesetzt werden. Kommerzielle Produkte, die diese Vorgabe erfüllen, sind z.B. DARCO^{®} KB-B (von Norit Americas Inc.), Black Pearls2000 (von CABOT Corp.) oder XC-72 (von CABOT Corp.), aber auch kalzinierter Petrolkoks mit geringem Schwefelgehalt (< 1 Gew.-%) oder der im Rahmen der Methanpyrolyse generierte Pyrolysekohlenstoff.

Das Verfahren ist weiterhin zweckmäßig dadurch vorteilhaft weiter ausgestaltet, dass die Kohlenstoffpartikel mit einer Geschwindigkeit von 0,1 m/h bis 100 m/h, bevorzugt 0,1 m/h bis 20 m/h, und besonders bevorzugt 1 m/h bis 10 m/h durch den Reaktor geleitet werden (die Geschwindigkeit bezeichnet hier die Wanderungsgeschwindigkeit der Partikel im Reaktor).

Weiterhin ist es zweckmäßig, wenn der Reaktor bei einem Druck im Bereich von 1 bar bis 40 bar, bevorzugt 5 bar bis 30 bar betrieben wird.

Vorstehend wurde angegeben, dass der Reaktor im angegebenen Verfahren mindestens zwei Elektroden aufweisen soll. In einer bevorzugten Ausführungsform weist der Reaktor genau zwei Elektroden auf. In einer alternativen Ausführungsform weist der Reaktor drei bis zehn und bevorzugt vier bis acht Elektroden auf.

Für eine Verwertbarkeit der im Rahmen des beschriebenen Verfahrens verwendeten Kohlenstoffpartikel als zusätzliches Wertprodukt ist häufig eine bestimmte Partikelgröße erforderlich. Die Größe der Partikel bzw. die spezifische Kohlenstoffabscheidung kann in einem Reaktionsschritt über das Temperaturniveau bzw. die Wärmekapazität der Feststoffschüttung in gewissen Grenzen eingestellt werden. Wenn größere Partikelgrößen aus im Vergleich kleinen Partikeln erzeugt werden sollen, kann aber ein einmaliger Durchgang der Partikel durch die Reaktionszone nicht ausreichend sein um die gewünschte Partikelgröße zu realisieren. Um dennoch größere Partikelgrößen aus kleinen Partikeln herstellen zu können ist es aber im Rahmen der Erfindung möglich, die aus dem unteren Bereich des Reaktors entnommenen Partikel erneut im oberen Bereich des Reaktors zuzugeben, so dass die Partikel den Reaktionsbereich mehrfach passieren und so eine größere Partikelgröße aufbauen können.

Ein Nachteil einer solchen Verfahrensführung kann darin bestehen, dass sich im Reaktor Kohlenstoffpartikel unterschiedlicher Größe befinden, was, aufgrund eines ggf. abweichenden Leitfähigkeitsverhaltens der Mischung, eine erneute Abstimmung der Fließgeschwindigkeiten der Kohlenstoffpartikel und der zugeführten Kohlenwasserstoffe erforderlich machen kann. Dieser Nachteil lässt sich durch hintereinandergeschaltete Reaktoren, bei denen die am unteren Ende eines ersten Reaktors entnommenen Kohlenstoffpartikel in den oberen Bereich eines direkt nachgeschalteten Reaktors eingeleitet werden, vermeiden. In einer bevorzugten Ausführungsform ist das erfindungsgemäße Verfahren daher so weitergebildet, dass es in mindestens zwei sequentiell hintereinander geschalteten Reaktoren durchgeführt wird, wobei jeweils Kohlenstoffpartikel im Bereich unterhalb der Reaktionszone (auch als Sumpf bezeichnet), in der Kohlenwasserstoffe zu Wasserstoff und Kohlenstoff umgesetzt werden, aus einem vorgeschalteten Reaktor entnommen und in einen direkt nachgeschalteten Reaktor im Bereich oberhalb der beiden Elektroden (auch als Kopf bezeichnet) eingeleitet werden. Eine Verfahrensweise mit mindestens zwei sequentiell hintereinander geschalteten Reaktoren ermöglicht auch die Generierung von im Vergleich zum Kohlenstoffpartikelausgangsmaterial signifikant größeren Partikeln.

Im Rahmen des beschriebenen Verfahrens ist es möglich, die Kohlenstoffpartikel, die aus dem Reaktor oder hintereinander geschalteten Reaktoren erhalten werden, zu fraktionieren (d.h. in Partikel mit einer vorbestimmten Partikelgröße und Partikel, die kleiner sind als eine vorbestimmte Partikelgröße zu trennen). Die Partikel, die kleiner sind als die vorbestimmte Partikelgröße können dann in den Reaktor, oder bei mehreren hintereinander geschalteten Reaktoren, in den ersten Reaktor zurückgeführt werden. Durch diese Verfahrensführung kann die Menge an Kohlenstoffpartikel-Material, das dem Prozess zugeführt werden muss, vermindert, oder sogar ganz auf Null reduziert werden. Die Partikel, die die vorbestimmte Partikelgröße aufweisen, können als Produkt entnommen werden. Zudem ist es möglich, die Partikel, die kleiner sind als eine vorbestimmte Partikelgröße, oder einen Teil der Produktpartikel einem Verkleinerungsschritt, wie z.B. einem Walzenstuhl, zuzuführen, in dem die Partikel gebrochen und zerkleinert werden. Dadurch kann gewährleistet werden, dass ausreichend viele kleine Partikel im Prozess vorhanden sind.

Ferner offenbart ist eine nicht erfindungsgemäße Vorrichtung zur pyrolytischen Umsetzung von Kohlenwasserstoffen zu Wasserstoff und Kohlenstoff, die mindestens zwei hintereinander geschaltete Reaktoren mit einem Reaktorraum umfasst, wobei jeder dieser Reaktorräume mindestens zwei in Bezug auf die Durchflussrichtung der Kohlenwasserstoffe in Fließrichtung voneinander beabstandete Elektroden, über die der Reaktor widerstandsbeheizt werden kann, aufweist und wobei jeder vorgeschaltete Reaktor in seinem unteren Bereich eine Entnahmevorrichtung für partikuläres Material aufweist, die mit dem oberen Bereich des jeweils nachgeschalteten Reaktors verbunden ist und die Zufuhr von partikulärem Material zum oberen Bereich des jeweils nachgeschalteten Reaktors ermöglicht.

In Bezug auf die vorstehende Vorrichtung ist es bevorzugt, wenn die Entnahmevorrichtung als Zellradschleuse, Förderschnecke oder Feststoffarmatur ausgeführt ist. Weiterhin ist es zweckmäßig, wenn die mindestens zwei hintereinander geschalteten Reaktoren in der erfindungsgemäßen Vorrichtung jeweilige Zuleitungen für Kohlenwasserstoffe und jeweilige Ableitungen für Wasserstoffgas aufweisen. Die Ableitungen für Wasserstoffgas können dann an geeigneter Stelle in einer gemeinsamen Leitung vereinigt werden.

Die Anzahl der Reaktoren kann entsprechend der benötigten Kohlenstoffabscheidung bzw. des Partikelzuganges gewählt werden. In jedem Reaktionsschritt wird zweckmäßig am im unteren Bereich des Reaktors Kohlenwasserstoffgas, insbesondere Erdgas, zugeführt, welches in der Reaktionszone zu Kohlenstoff und Wasserstoff umgesetzt wird. Der Wasserstoff bzw. das Produktgas wird am oberen Ende jedes Reaktors abgezogen, die einzelnen Produktgasströme werden bevorzugt zusammengeführt und die noch enthaltene Produktgaswärme wird zweckmäßig in einem Dampferzeuger genutzt.

Durch die Wärmeintegration der heißen Kohlenstoffpartikel in den Zustrom von Kohlenwasserstoffen weist der Kohlenstoff am Reaktorboden ein moderates Temperaturniveau auf. Im Kontext der vorliegenden Erfindung ist es ebenfalls möglich, dass der heiße Produktgasstrom zur Vorwärmung des Zustroms von Kohlenwasserstoffen eingesetzt wird. Von Nachteil ist in dieser Variante jedoch die hohe Kohlenstoffpartikeltemperatur, die hohe Materialanforderungen an die Vorrichtung zur Überleitung der Kohlenstoffpartikel in den nächsten Reaktor stellt.

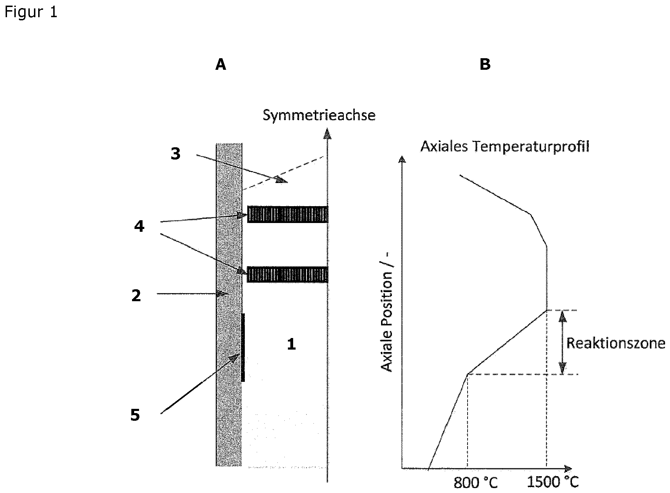

Figur 1 **A** zeigt einen exemplarischen Reaktor mit einem Reaktorraum **1,** der von einer Reaktorwand **2** begrenzt ist. Im Reaktorraum befindet sich eine Kohlenstoffschüttung **3,** zwei Elektroden **4,** sowie ein Bereich **5,** in dem der Reaktionsumsatz der Pyrolyse stattfindet. In **B** ist ein exemplarisches Temperaturprofil gemäß der Erfindung für einen solchen Reaktoraufbau angegeben.

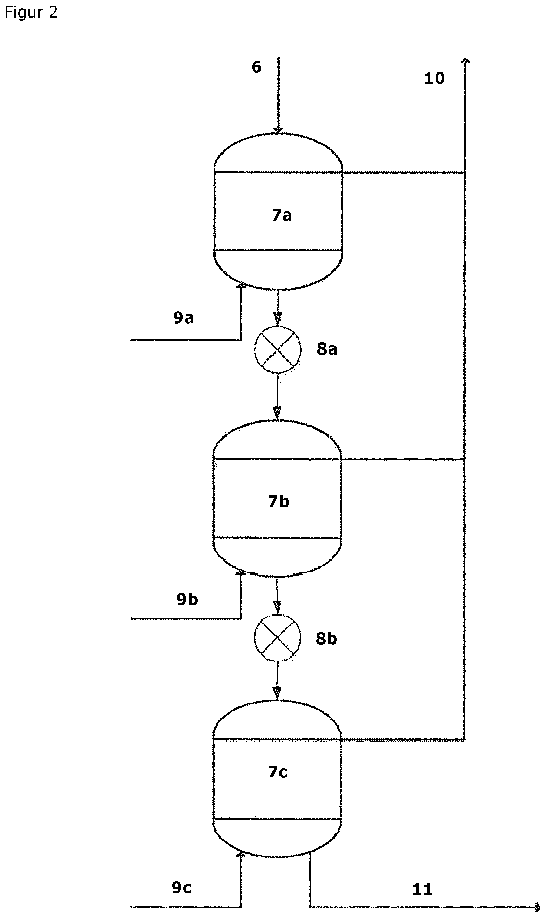

In Figur 2 ist eine exemplarische Verschaltung mit drei Reaktoren gezeigt. In diesem Reaktionsschema werden Kohlenstoffpartikel **6** am Kopf des ersten Reaktors **7a** aufgegeben und durchlaufen dort einen ersten Pyrolyseschritt. Der Pyrolysekohlenstoff wird dann gravimetrisch über eine Fördereinheit **8a,** wie z.B. eine Zellradschleuse, in einen zweiten Reaktor überführt. Der erste Reaktor wird über die Leitung **9a** mit Kohlenwasserstoffausgangsmetrial versorgt, während das im Reaktor generierte Produktgas über die Leitung **10** abgeführt wird. Im zweiten Reaktor **7b,** der über die Leitung **9b** mit Kohlenwasserstoffausgangsmaterial versorgt wird, durchlaufen die Kohlenstoffpartikel einen zweiten Pyrolyseschritt. Bei der Reaktionsführung ist darauf zu achten, dass das Produktgas des zweiten Reaktors **7b** den Zustrom des Kohlenwasserstoffausgangsmetrial des ersten Reaktors **9a** nicht kontaminiert, da dies zu einer Verdünnung und damit zur Umsatzreduktion im ersten Reaktor führt. Die Zellradschleuse regelt somit zum einen die Wanderbettgeschwindigkeit im Reaktor und damit die Position der Reaktionszone, zum anderen werden die Gasphasen der Reaktionsschritte voneinander isoliert. Am unteren Ende des zweiten Reaktors **7b** ist wiederum eine Fördereinheit **8b,** wie z.B. eine Zellradschleuse, vorhanden, über die die Kohlenstoffpartikel in den dritten Reaktor **7c** überführt werden. Dieser wird wiederum über die Leitung **9c** mit Kohlenwasserstoffausgangsmetrial versorgt. Nach Durchlaufen des dritten Reaktors **7c** werden die Kohlenstoffpartikel über die Leitung **11** abgeführt.

### Bezugszeichenliste

- 1: Reaktorraum
- 2: Reaktorwand
- 3: Kohlenstoffpartikelschüttung
- 4: Elektroden
- 5: Hauptreaktionsbereich
- 6: Zuleitung für Kohlenstoffpartikel
- 7a, 7b, 7c: Reaktor
- 8a, 8b: Fördereinheit
- 9a, 9b, 9c: Zuleitung für Kohlenwasserstoffausgangsmaterial
- 10: Ableitung Produktgas
- 11: Ableitung Kohlenstoffpartikel

## Patentansprüche

1. Verfahren zur Herstellung von Wasserstoff und Pyrolysekohlenstoff aus Kohlenwasserstoffen, wobei die Kohlenwasserstoffe in einem Reaktor bei Temperaturen von 1000°C oder mehr zu Wasserstoff und Kohlenstoff umgesetzt werden, und wobei der Reaktor mindestens zwei in Fließrichtung der Kohlenwasserstoffe voneinander beanstandete Elektroden aufweist, **dadurch gekennzeichnet, dass** Kohlenstoffpartikel oder Packungen davon mit einer solchen Geschwindigkeit im Gegenstrom zu den Kohlenwasserstoffen in den Reaktor eingeleitet und im Bereich zwischen den Elektroden auf eine Temperatur oberhalb der Zersetzungstemperatur der Kohlenwasserstoffe zu Wasserstoff und Kohlenstoff erhitzt werden, dass die Reaktionszone, in der die Kohlenwasserstoffe zu Wasserstoff und Kohlenstoff umgesetzt werden, in Bezug auf die Strömungsrichtung der Kohlenstoffpartikel räumlich von der sich zwischen den Elektroden befindlichen Beheizungszone getrennt ist, wobei die Kohlenstoffpartikel zuerst die Beheizungszone und anschließend die Reaktionszone durchströmen.

2. Verfahren nach Anspruch 1, **dadurch gekennzeichnet, dass** die Kohlenstoffpartikel zwischen den Elektroden auf eine Temperatur im Bereich von 1000°C bis 2000°C, bevorzugt 1200°C bis 1800°C und weiterbevorzugt 1400°C bis 1600°C erhitzt werden.

3. Verfahren nach Anspruch 1 oder 2, **dadurch gekennzeichnet, dass** die Kohlenstoffpartikel mit einer Geschwindigkeit von 0,1 m/h bis 20 m/h, bevorzugt 1 m/h bis 10 m/h in den Reaktor zugeführt werden.

4. Verfahren nach einem der Ansprüche 1 bis 3, **dadurch gekennzeichnet, dass** die Kohlenstoffpartikel oder Packungen davon eine Leitfähigkeit von 0,001 S/m bis 100 S/m aufweisen und bevorzugt in Form von Kohlenstoffpartikeln vorliegen.

5. Verfahren nach mindestens einem der vorstehenden Ansprüche, **dadurch gekennzeichnet, dass** es sich bei den Kohlenwasserstoffen um Methan oder Erdgas handelt.

6. Verfahren nach mindestens einem der vorstehenden Ansprüche, **dadurch gekennzeichnet, dass** die Kohlenwasserstoffe mit einer Geschwindigkeit von 0,1 m/s bis 10 m/s, bevorzugt 0,2 m/s bis 5 m/s durch den Reaktor geleitet werden.

7. Verfahren nach mindestens einem der vorstehenden Ansprüche, **dadurch gekennzeichnet, dass** der Reaktor bei einem Druck im Bereich von 1 bar bis 40 bar betrieben wird.

8. Verfahren nach mindestens einem der vorstehenden Ansprüche, **dadurch gekennzeichnet, dass** das Verfahren in mindestens zwei sequentiell hintereinandergeschalteten Reaktoren durchgeführt wird, und dass jeweils Kohlenstoffpartikel im Bereich unterhalb der Reaktionszone, in der Kohlenwasserstoffe zu Wasserstoff und Kohlenstoff umgesetzt werden, aus einen vorgeschalteten Reaktor entnommen und in einen direkt nachgeschalteten Reaktor im Bereich oberhalb der beiden Elektroden eingeleitet werden.

9. Verfahren nach mindestens einem der vorstehenden Ansprüche, **dadurch gekennzeichnet, dass** die aus dem Reaktor oder den hintereinander geschalteten Reaktoren entnommenen Kohlenstoffpartikel, fraktioniert werden, und die Partikel, die kleiner sind als eine vorbestimmte Partikelgröße, in den Reaktor, oder bei mehreren hintereinander geschalteten Reaktoren, in den ersten Reaktor zurückgeführt werden.

## Claims

1. A process for the production of hydrogen and pyrolysis carbon from hydrocarbons, wherein the hydrocarbons are converted to hydrogen and carbon in a reactor at temperatures of 1000°C or more, and wherein the reactor has at least two electrodes spaced apart from each other in the direction of flow of the hydrocarbons, **characterized in that** carbon particles or packings thereof are introduced into the reactor in countercurrent to the hydrocarbons at such a rate and are heated in the region between the electrodes to a temperature above the decomposition temperature of the hydrocarbons to form hydrogen and carbon that the reaction zone in which the hydrocarbons are converted to hydrogen and carbon is spatially separated in the flow direction of the carbon particles from the heating zone located between the electrodes, wherein the carbon particles flow first through the heating zone and then through the reaction zone.

2. The process according to claim 1, **characterized in that** the carbon particles between the electrodes are heated to a temperature in the range of 1000°C to 2000°C, preferably 1200°C to 1800°C and more preferably 1400°C to 1600°C.

3. Process according to claim 1 or 2, **characterized in that** the carbon particles are fed into the reactor at a rate of 0.1 m/h to 20 m/h, preferably 1 m/h to 10 m/h.

4. Process according to any one of claims 1 to 3, **characterized in that** the carbon particles or packings thereof have a conductivity of 0.001 S/m to 100 S/m and are preferably in the form of carbon particles.

5. Process according to at least one of the preceding claims, **characterized in that** the hydrocarbons are methane or natural gas.

6. Process according to at least one of the preceding claims, **characterized in that** the hydrocarbons are passed through the reactor at a velocity of 0.1 m/s to 10 m/s, preferably 0.2 m/s to 5 m/s.

7. Process according to at least one of the preceding claims, **characterized in that** the reactor is operated at a pressure in the range from 1 bar to 40 bar.

8. Process according to at least one of the preceding claims, **characterized in that** the process is carried out in at least two reactors sequentially connected in series, and **in that** in each case carbon particles are removed from an upstream reactor in the region below the reaction zone in which hydrocarbons are converted to hydrogen and carbon and are introduced into a reactor directly downstream in the region above the two electrodes.

9. A process according to at least one of the preceding claims, **characterized in that** the carbon particles removed from the reactor or the series-connected reactors are fractionated and the particles smaller than a predetermined particle size are returned to the reactor or, in the case of several series-connected reactors, to the first reactor.

## Revendications

1. Procédé de préparation d'hydrogène et de carbone de pyrolyse à partir d'hydrocarbures, les hydrocarbures étant transformés dans un réacteur à des températures de 1 000 °C ou plus en hydrogène et en carbone, et le réacteur présentant au moins deux électrodes à distance l'une de l'autre dans la direction d'écoulement des hydrocarbures, **caractérisé en ce que** des particules de carbone ou des paquets de celles-ci sont introduit(e)s à contre-courant des hydrocarbures dans le réacteur avec une telle vitesse et chauffées entre les électrodes à une température supérieure à la température de décomposition des hydrocarbures en hydrogène et carbone, que la zone de réaction dans laquelle les hydrocarbures sont transformés en hydrogène et en carbone, en ce qui concerne la direction du flux des particules de carbone, est séparée, dans l'espace, de la zone de chauffage se trouvant entre les électrodes, les particules de carbone traversant d'abord la zone de chauffage et ensuite la zone de réaction.

2. Procédé selon la revendication 1, **caractérisé en ce que** les particules de carbone sont chauffées entre les électrodes à une température dans la plage de 1 000 °C à 2 000 °C, préférablement de 1 200 °C à 1 800 °C et plus préférablement de 1 400 °C à 1 600 °C.

3. Procédé selon la revendication 1 ou 2, **caractérisé en ce que** les particules de carbone sont introduites dans le réacteur avec une vitesse de 0,1 m/h à 20 m/h, préférablement de 1 m/h à 10 m/h.

4. Procédé selon l'une quelconque des revendications 1 à 3, **caractérisé en ce que** les particules de carbone ou les paquets de celles-ci présentent une conductivité de 0,001 S/m à 100 S/m et sont présents préférablement sous forme de particules de carbone.

5. Procédé selon au moins l'une des revendications précédentes, **caractérisé en ce que** les hydrocarbures sont du méthane ou du gaz naturel.

6. Procédé selon au moins l'une des revendications précédentes, **caractérisé en ce que** les hydrocarbures sont conduits à travers le réacteur avec une vitesse de 0,1 m/s à 10 m/s, préférablement de 0,2 m/s à 5 m/s.

7. Procédé selon au moins l'une des revendications précédentes, **caractérisé en ce que** le réacteur est exploité à une pression dans la plage de 1 bar à 40 bars.

8. Procédé selon au moins l'une des revendications précédentes, **caractérisé en ce que** le procédé est réalisé dans au moins deux réacteurs montés l'un derrière l'autre séquentiellement, et qu'à chaque fois des particules de carbone sont prélevées d'un réacteur en amont dans l'emplacement en dessous de la zone de réaction dans laquelle des hydrocarbures sont transformés en hydrogène et en carbone, et introduites dans un réacteur directement en aval dans l'emplacement au-dessus des deux électrodes.

9. Procédé selon au moins l'une des revendications précédentes, **caractérisé en ce que** les particules de carbone prélevées du réacteur ou des réacteurs montés les uns derrière les autres, sont fractionnées, et les particules qui sont plus petites qu'une taille de particules prédéterminée sont renvoyées dans le réacteur, ou, dans le cas de plusieurs réacteurs montés les uns derrière les autres, dans le premier réacteur.
